# EUROPÄISCHE PATENTSCHRIFT

(11) **EP 3 110 680 B1**
(45) Veröffentlichungstag und Bekanntmachung des Hinweises auf die Patenterteilung: **04.04.2018**
(21) Anmeldenummer: 15705619.3
(22) Anmeldetag: 20.02.2015
(51) Int. Cl.: B62D 1/16, B62D 7/22

(54) **LENKWELLE FÜR EIN KRAFTFAHRZEUG**
STEERING SHAFT FOR A MOTOR VEHICLE
ARBRE DE DIRECTION POUR VÉHICULE AUTOMOBILE

(30) Priorität: 25.02.2014 DE 102014102408
(43) Veröffentlichungstag der Anmeldung: 04.01.2017
(73) Patentinhaber: ThyssenKrupp Presta AG, 9492 Eschen (LI); thyssenkrupp AG, 45143 Essen (DE)
(72) Erfinder: BUGL, Michael, A-6800 Feldkirch (AT); VOSCEK, Martin, CH-9656 Alt St. Johann (CH)
(74) Vertreter: thyssenkrupp Intellectual Property GmbH
(86) Internationale Anmeldenummer: PCT/EP2015/053666
(87) Internationale Veröffentlichungsnummer: WO 2015/128267

(56) Entgegenhaltungen:
- EP-A1- 0 145 572
- DE-A1-102012 101 386

## Beschreibung

### Technisches Gebiet

Die vorliegende Erfindung betrifft eine Lenkwelle für ein Kraftfahrzeug, die ein erstes Wellenteil und ein zweites Wellenteil umfasst, welche zur Übertragung eines Drehmoments miteinander verbunden sind, und zwischen welchen ein Dämpfungselement zur Dämpfung eingetragener Schwingungen und/oder Vibrationen vorgesehen ist.

### Stand der Technik

Aus dem Stand der Technik ist es bekannt, Lenkwellen für Kraftfahrzeuge bereitzustellen, bei welchen ein erstes Wellenteil mit einem zweiten Wellenteil zur Übertragung eines Drehmoments mittels eines losen Formschlusses verbunden ist. Zwischen dem ersten Wellenteil und dem zweiten Wellenteil ist ein elastisches Element angeordnet, welches beispielsweise als ein zwischen einem inneren Dämpfungsteil und einem äußeren Dämpfungsteil angeordnetes Elastomer bereitgestellt ist. Das innere Dämpfungsteil und das äußere Dämpfungsteil können den losen Formschluss zwischen dem ersten Wellenteil und dem zweiten Wellenteil bereitstellen. Über das zwischen dem inneren Dämpfungsteil und dem äußeren Dämpfungsteil angeordnete Elastomer können über die Lenkwelle auf das erste Wellenteil übertragene Vibrationen gegenüber dem zweiten Wellenteil gedämpft werden. Eine solche Lenkwelle ist beispielsweise aus der DE 10 2012 101 386 A1 bekannt.

Aus der DE 20 2012 011 579 U1 ist eine Vorrichtung zum dämpfenden Verbinden zweier Wellenabschnitte bekannt, bei welcher zwischen einer radial inneren Buchse und einer radial äußeren Buchse eine Dämpfungsschicht vorgesehen ist, über welche auf den einen Wellenabschnitt eingetragene Vibrationen gegenüber dem anderen Wellenabschnitt gedämpft werden können.

In Lenksystemen ist es grundsätzlich gewünscht, Schwingungen und/oder Vibrationen, die vom Fahrzeug oder von Hilfskraftunterstützungen in das Lenksystem eingebracht werden, derart zu dämpfen, dass sie vom Fahrer nicht als Störungen in Form von Geräuschen oder von auf das Lenkrad übertragenen Störmomenten wahrgenommen werden. Eine Herausforderung besteht darin, die Dämpfungseigenschaften einer Lenkwelle gezielt auf die jeweilige Problemstellung hin auszulegen, beispielsweise auf das von dem jeweiligen Fahrzeug im Betrieb eingetragene Schwingungs- und/oder Vibrationsmuster. Ein Ziel ist es dabei auch, mit einer möglichst einheitlichen Konfiguration einer Lenkwelle eine Vielzahl unterschiedlicher Schwingungs- und/oder Vibrationsmuster abzudecken und entsprechend mit einer einheitlichen Konfiguration unterschiedliche Fahrzeugtypen bedienen zu können.

Aus der gattungsbildenden EP 0 145 572 A1 ist eine Lenkwelle mit einem Dämpfungselement bekannt, welches nur in einem Teilbereich, dem Fixierbereich, der Kontaktfläche mit dem Träger fest verbunden ist und in einem Bereich der Kontaktfläche mit dem Träger nicht fest verbunden ist. Dadurch wird eine Flexibilität in Längsrichtung erreicht.
Eine Anpassung der jeweiligen Dämpfungseigenschaften, insbesondere auch der Dämpfungseigenschaften in der Axialrichtung der Wellenabschnitte, kann in den aus dem Stand der Technik bekannten Vorrichtungen durch die Dimensionierung der Elastomerschicht beziehungsweise der Dämpfungsschicht, sowie über die Auswahl des jeweiligen Dämpfungsbeziehungsweise Elastomermaterials erreicht werden. Entsprechend muss für jede Anwendung eine neue Dimensionierung und/oder ein anderes Material verwendet werden, wodurch eine flexible Verwendung einer Lenkwelle mit feststehenden Dimensionen sowie gleichen Teilen für unterschiedliche Anwendungen nur eingeschränkt möglich ist.

### Darstellung der Erfindung

Ausgehend von dem bekannten Stand der Technik ist es eine Aufgabe der vorliegenden Erfindung, eine Lenkwelle anzugeben, welche eine flexible Einstellung der Dämpfungseigenschaften für unterschiedliche Anwendungen ermöglicht.
Diese Aufgabe wird durch die Lenkwelle mit den Merkmalen des Anspruchs 1 gelöst. Vorteilhafte Weiterbildungen ergeben sich aus den Unteransprüchen.
Entsprechend wird eine Lenkwelle für ein Kraftfahrzeug mit einem ersten Wellenteil und einem zweiten Wellenteil vorgeschlagen, welche zu Übertragung eines Drehmoments miteinander verbunden sind und zwischen welchen zur Dämpfung eingetragener Schwingungen und/oder Vibrationen ein Dämpfungselement angeordnet ist, das mit einer Kontaktfläche an einem Träger anliegt. Erfindungsgemäß ist das Dämpfungselement nur in mindestens einem Teilbereich der Kontaktfläche mit dem Träger fest verbunden und in einem Bereich der Kontaktfläche mit dem Träger nicht fest verbunden ist, das Dämpfungselement in dem mindestens einen Fixierbereich über Stoffschluss und/oder adhäsiv mit dem Träger verbunden ist, und in dem mit dem Träger nicht verbundenen Bereich (48) ein Reibschluss zwischen Dämpfungselement und Träger vorliegt.
Dadurch, dass das Dämpfungselement nur in mindestens einem Teilbereich, der auch als Fixierbereich weiter bezeichnet wird, mit der Kontaktfläche des Trägers fest verbunden ist, kann eine Einstellung der jeweiligen Dämpfungseigenschaften, insbesondere der Dämpfungseigenschaften in Axialrichtung der Lenkwelle, durch eine Dimensionierung des jeweiligen fest mit dem Träger verbundenen Teilbereichs der Kontaktfläche erreicht werden.
Das Dämpfungsverhalten des Dämpfungselements in Axialrichtung der Lenkwelle ist beispielsweise bei einem festen Verbinden des Dämpfungselements mit dem Träger in nur einem sehr kleinen Fixierbereich der Kontaktfläche und einem entsprechend großen, nicht mit dem Träger verbundenen Bereich der Kontaktfläche anders, als bei einem festen Verbinden des Dämpfungselements mit dem Träger in einem größeren Teilbereich der Kontaktfläche oder gar einem festen Verbinden über die gesamte Kontaktfläche hinweg. Durch die Dimensionierung des Fixierbereiches der Kontaktfläche, welcher mit dem Träger fest verbunden ist, kann das Dämpfungsverhalten entsprechend flexibel eingestellt werden, wobei die gleichen Komponenten für die Lenkwelle verwendet werden können. Lediglich die Ausdehnung des Fixierbereiches der Kontaktoberfläche, in welchem eine feste Verbindung erreicht wird, wird variiert. Insbesondere ist es durch die Variation der Ausdehnung des Fixierbereiches der Kontaktfläche nicht notwendig, ein anderes Dämpfungselement zu verwenden, um ein anderes Dämpfungsverhalten zu erreichen, sondern dies kann allein durch eine Variation der Ausdehnung des Fixierbereiches der Kontaktfläche, der mit dem Träger fest verbunden wird, erreicht werden.
Durch die feste Verbindung des Fixierbereiches der Kontaktfläche des Dämpfungselements mit dem Träger ist das Dämpfungselement in diesem Fixierbereiches der Kontaktfläche ortsfest mit dem Träger verbunden und kann sich in diesem Fixierbereiches der Kontaktfläche nicht relativ zum Träger bewegen. Es ist unmittelbar einleuchtend, dass über eine Variation der Ausdehnung des Fixierbereiches auch eine Variation der Dämpfungseigenschaften der Lenkwelle erzielt werden kann.

Damit ist das Dämpfungselement in einem anderen Bereich der Kontaktfläche mit dem Träger nicht fest verbunden. Erfindungsgemäß liegt in dem mit dem Träger nicht fest verbundenen Bereich ein Reibschluss zwischen Dämpfungselement und Träger vor. So kann erreicht werden, dass in dem mit dem Träger nicht fest verbundenen Bereich eine Verschiebbarkeit des Dämpfungselements gegenüber dem Träger erlaubt ist, welche das Dämpfungsverhalten des Dämpfungselements beeinflusst. Über die Dimensionierung und die geometrische Ausgestaltung der mit dem Träger nicht verbundenen Bereiche kann so das Dämpfungsverhalten der Lenkwelle eingestellt werden. Weiterhin kann über das Bereitstellen eines Reibschlusses in dem nicht fest mit dem Träger verbundenen Bereich der Kontaktfläche eine entsprechende Dämpfung eingestellt werden. Die Eigenschaften des Reibschlusses können durch die auf das Dämpfungselement aufgebrachte Vorspannung und die Materialeigenschaften eingestellt werden.
Unter einer festen Verbindung des Dämpfungselements in einem Fixierbereich der Kontaktfläche mit dem Träger wird auch verstanden, dass das Dämpfungselement an dem Träger an der Kontaktfläche im Wesentlichen vollflächig anliegt, aber nur in einem Fixierbereich dieser Kontaktfläche mit dem Träger so fest verbunden ist, dass sich das Dämpfungselement in diesem Fixierbereich gegenüber dem Träger nicht bewegen kann.

Die feste Verbindung wird erfindungsgemäß beispielsweise durch Stoffschluss, wie er beispielsweise beim Vulkanisieren eines Dämpfungselements mit dem Träger erreicht wird, oder adhäsiv erreicht. Entsprechend ist nur ein Fixierbereich der Kontaktfläche des Dämpfungselements fest beziehungsweise starr mit dem Träger verbunden, und die nicht mit dem Träger verbundenen Bereiche des Dämpfungselements sind mit dem Träger entsprechend lediglich über einen Reibschluss verbunden.
Zur Herstellung einer solchen Verbindung wird beispielsweise bei einem Vulkanisierprozess ein Haftvermittler zwischen dem Dämpfungselement und dem Träger nur in den Fixierbereichen der Kontaktfläche aufgetragen, in welchen tatsächlich eine feste Verbindung zwischen dem Dämpfungselement und dem Träger erreicht werden soll. Die anderen Bereiche, in welchen eine solche feste Verbindung nicht hergestellt werden sollen, werden entsprechend nicht mit dem Haftvermittler versehen, so dass eine feste Verbindung zwischen dem Dämpfungselement und dem Träger in diesen Bereichen nicht stattfindet.
Je nach geometrischer Ausbildung des Trägers und des Dämpfungselements hat die genannte Verbindung des Dämpfungselements nur einen sehr geringen Einfluss auf die Dämpfungseigenschaften in radialer Richtung, oder sie hat überhaupt keinen Einfluss hierauf. Die Dämpfungseigenschaften in axialer Richtung hingegen können in einem weiten Bereich variiert werden.

Der Träger ist bevorzugt durch das erste Wellenteil, durch das zweite Wellenteil, durch eine zwischen dem ersten Wellenteil und dem zweiten Wellenteil angeordnete erste Hülse, und/oder durch eine zwischen dem ersten Wellenteil und dem zweiten Wellenteil angeordnete zweite Hülse ausgebildet. Besonders bevorzugt ist dann das Dämpfungselement zwischen einer äußeren Hülse und einer inneren Hülse angeordnet, wobei die äußere Hülse und die innere Hülse zwischen dem ersten Wellenteil und dem zweiten Wellenteil angeordnet sind.

Um eine spielfreie Übertragung des Drehmoments zu ermöglichen, ist das Dämpfungselement bevorzugt unter radialer Vorspannung zwischen dem ersten Wellenteil und dem zweiten Wellenteil, zwischen einem Wellenteil und einer Hülse und/oder zwischen zwei Hülsen angeordnet.

Eine sichere Übertragung des Drehmoments wird erreicht, wenn bevorzugt der erste Wellenteil mit dem zweiten Wellenteil zur Übertragung eines Drehmoments in losem Formschluss steht und das Dämpfungselement eine elastische Verbindung zwischen dem ersten Wellenteil und dem zweiten Wellenteil bereitstellt. Besonders bevorzugt ist dabei, das Dämpfungselement zwischen einer äußeren Hülse und einer inneren Hülse anzuordnen, wobei die innere Hülse mit dem zweiten Wellenteil und die äußere Hülse mit dem ersten Wellenteil drehfest in Kontakt steht und zwischen der äußeren Hülse und der inneren Hülse der lose Formschluss ausgebildet ist.

Um eine besonders flexible Anpassung der Dämpfungseigenschaften an die jeweiligen Vorgaben erreichen zu können, ist der Fixierbereich der Kontaktfläche, in welchem das Dämpfungselement mit dem Träger fest verbunden ist, in Form mindestens eines Streifens, der sich in Umfangsrichtung erstreckt und die Axialrichtung geschlossen umschließt, ausgebildet. Besonders bevorzugt ist der Fixierbereich, in dem das Dämpfungselement mit dem Träger fest verbunden ist, durch zwei in Axialrichtung zueinander beabstandete Streifen dargestellt, die besonders bevorzugt an den axialen Endbereichen des Dämpfungselements ausgebildet sind.

Alternativ können die Fixierbereiche in Form mindestens eines sich in Axialrichtung erstreckenden Streifens oder mindestens eines sich diagonal oder schraubenförmig erstreckenden Streifens oder in Form mindestens eines Fleckens oder mindestens eines Punktes oder mindestens zweier nicht miteinander verbundener Fixierbereiche ausgebildet sein.

Eine deutliche Beeinflussung der Dämpfungseigenschaften ergibt sich dann, wenn der fest verbundene Teilbereich, also die summarische Fläche aller Fixierbereiche, zwischen 5% und 95% der Kontaktfläche beträgt, bevorzugt zwischen 5% und 70%, besonders bevorzugt zwischen 5% und 40%. Wenn eine hohe Elastizität in Längsrichtung erreicht werden soll, können die Flächen der Fixierbereiche auch im Wertebereich zwischen 5% und 20% der gesamten Kontaktfläche liegen. Der Träger ist bevorzugt in Form einer Hülse beziehungsweise einer Buchse vorgesehen, und besonders bevorzugt in Form einer inneren Hülse und einer äußeren Hülse, zwischen welchen das Dämpfungselement angeordnet ist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine Lenkwelle mit einem ersten Wellenteil und einem zweiten Wellenteil und einem dazwischen angeordneten Dämpfungselement in einem ersten Ausführungsbeispiel;
- Figur 2: eine schematische Schnittansicht einer Lenkwelle für ein Kraftfahrzeug in einem Längsschnitt in einem zweiten Ausführungsbeispiel;
- Figur 3: eine Querschnittansicht der Lenkwelle aus Figur 2 entlang des Schnitts B-B.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

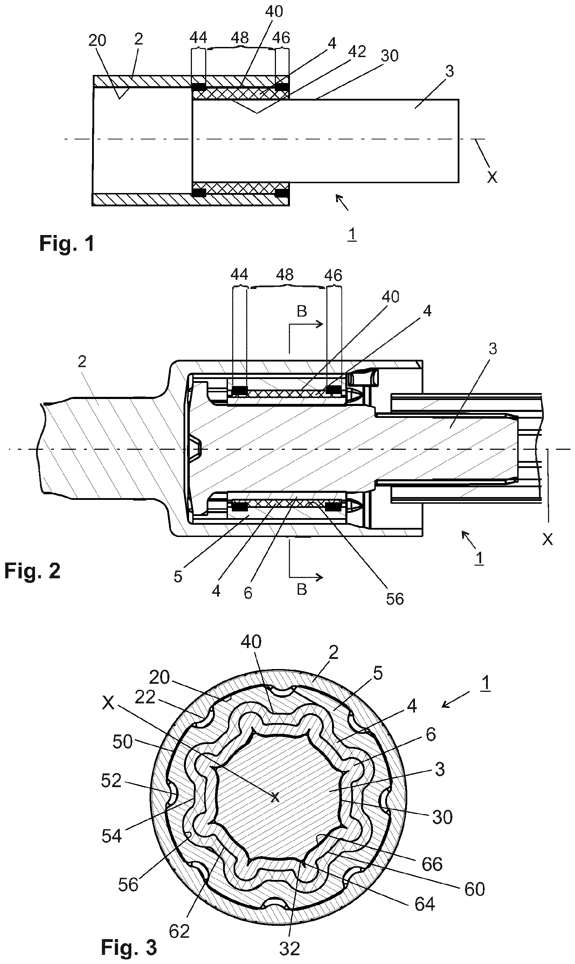

In Figur 1 ist eine Lenkwelle 1 gezeigt, welche ein erstes Wellenteil 2 und ein zweites Wellenteil 3 umfasst. Zwischen dem ersten Wellenteil 2 und dem zweiten Wellenteil 3 ist ein Dämpfungselement 4 angeordnet, das eine erste Kontaktfläche 40 aufweist, welche an einer Innenwand 20 des ersten Wellenteils 2 anliegt. Weiterhin weist das Dämpfungselement 4 eine zweite Kontaktfläche 42 auf, welche an der Außenwand 30 des zweiten Wellenteils 3 anliegt.

Das Dämpfungselement 4 ist in dem gezeigten Ausführungsbeispiel in Form einer Elastomerschicht bereitgestellt, welche zwischen dem ersten Wellenteil 2 und dem zweiten Wellenteil 3 angeordnet ist. Das Dämpfungselement 4 kann aber auch beliebige andere Ausgestaltungen und Materialien aufweisen, solange es die gewünschten Dämpfungseigenschaften bereitstellt. Zu bevorzugen sind dabei Dämpfungselemente aus Gummi und elastischen Kunststoffen, insbesondere aus elastomeren Kunststoffen.

Das Dämpfungselement 4 ist mit dem ersten Wellenteil 2 in zwei Teilbereichen 44, 46 der Kontaktfläche 40 fest verbunden. Zur Herstellung dieser festen Verbindung wurde in den Fixierbereichen 44 und 46 der Kontaktfläche 40 ein Haftvermittler aufgebracht, durch welchen beim Vulkanisieren eine stoffschlüssige Verbindung zwischen dem Dämpfungselement 4 und dem ersten Wellenteil 2 nur in den Fixierbereichen 44, 46 der Kontaktfläche 40 erreicht wird.

In dem gezeigten Ausführungsbeispiel ist der Träger durch das erste Wellenteil 2 ausgebildet. Wie im Nachfolgenden aber zu erkennen sein wird, kann der Träger, an welchem das Dämpfungselement 4 angebracht ist, auch durch das zweite Wellenteil 3, durch eine zwischen dem ersten Wellenteil 2 und dem zweiten Wellenteil 3 angeordnete erste Hülse 5 (siehe Figur 3), und/oder durch eine zwischen dem ersten Wellenteil 2 und dem zweiten Wellenteil 3 angeordnete zweite Hülse 6 ausgebildet sein.

In dem zwischen den verbundenen Fixierbereichen 44, 46 der Kontaktfläche 40 angeordneten, nicht mit dem Wellenteil 2 verbundenen Bereich 48 der ersten Kontaktfläche 40 des Dämpfungselementes 4 ist das Dämpfungselement 4 hingegen mit dem ersten Wellenteil 2 nicht fest verbunden. In diesem Bereich 48 liegt das Dämpfungselement 4 lediglich an der Innenwand 20 des ersten Wellenteils 2 an. Diese Anlage kann von einer losen Anlage mit Spiel bis hin zu einem Presssitz ausgestaltet werden.

In dem nicht verbundenen Bereich 48 liegt damit eine Verschiebbarkeit des Dämpfungselements 4 gegenüber dem Träger, also hier dem ersten Wellenteil 2, vor. Abhängig von den jeweiligen Oberflächenbeschaffenheiten beziehungsweise Materialbeschaffenheiten der Innenwand 20 des ersten Wellenteils 2 sowie der Kontaktfläche 40 des Dämpfungselements 4 liegt in dem nicht verbundenen Bereich 48 auch eine entsprechende Reibung vor, welche die Verschiebbarkeit des Dämpfungselements 4 gegenüber dem ersten Wellenteil 2 dämpft.

Abhängig von der Dicke des Dämpfungselements 4 kann dieses unter einer radialen Vorspannung zwischen dem ersten Wellenteil 2 und dem zweiten Wellenteil 3 angeordnet sein. Entsprechend ist in dem nicht mit dem ersten Wellenteil 2 verbundenen Teilbereich 48 der ersten Kontaktfläche 40 des Dämpfungselements 4 zwar eine radiale Vorspannung des Dämpfungselements 4 vorhanden, aber keine feste Verbindung. Vielmehr kann sich in diesem nicht verbundenen Bereich 48 der Kontaktfläche 40 das Dämpfungselement 4 zumindest in Axialrichtung X in einem gewissen Maße gegenüber dem Träger beziehungsweise gegenüber dem ersten Wellenteil 2 bewegen. Für eine Bewegung des nicht mit dem ersten Wellenteil 2 verbundenen Bereiches 48 des Dämpfungselements 4 gegenüber dem ersten Wellenteil 2 muss entsprechend lediglich die Reibung zwischen der ersten Kontaktfläche 40 des Dämpfungselements 4 und der Innenwand 20 des ersten Wellenteils 2 überwunden werden.

Entsprechend ist das Dämpfungselement 4 in den beiden fest verbundenen Fixierbereichen 44, 46 der Kontaktfläche 40 in Axialrichtung X fest beziehungsweise verschiebefest mit dem den Träger ausbildenden ersten Wellenteil 2 verbunden. In dem nicht mit dem ersten Wellenteil 2 verbundenen Bereich 48 der Kontaktfläche 40 ist das Dämpfungselement 4 jedoch gegenüber dem ersten Wellenteil 2 zumindest in Axialrichtung X der Lenkwelle 1 bewegbar.

Über die Dimensionierung und Anordnung der Fixierbereiche 44, 46 der Kontaktfläche 40, in welchen das Dämpfungselement 4 fest mit dem als Träger ausgebildeten ersten Wellenteil 2 verbunden ist, können die Dämpfungseigenschaften des Dämpfungselements 4 zumindest in Axialrichtung X variiert werden und an die jeweilige Aufgabenstellung angepasst werden.

Die Verbindung des Dämpfungselements 4 mit dem ersten Wellenteil 2 kann dabei als sich über den ganzen Umfang des Dämpfungselements 4 hinweg erstreckende, verbundene Fixierbereiche 44, 46, welche dann entsprechend als Umfangsstreifen ausgebildet sind, vorgesehen sein. Mit Vorzug sind zumindest zwei in Längsrichtung (=Axialrichtung X) voneinander beabstandete Streifen als Fixierbereich 44, 46 in Axialrichtung X gesehen, vorgesehen. Bevorzugt sind die beiden Fixierbereiche 44, 46 an den Enden des Dämpfungselements 4, angeordnet. Mit Vorzug sind die Streifen jeweils als geschlossene Flächen ausgebildet.

In hier nicht gezeigten Ausbildungen können fest verbundene Fixierbereiche auch als sich in Axialrichtung X oder diagonal erstreckende Streifen vorgesehen sein, oder als Flecken, Punkte oder als mindestens zwei nicht miteinander verbundene Fixierbereiche, beispielsweise Sektoren, vorgesehen sein. Weiterhin kann der Fixierbereich 44, 46 der Kontaktfläche 40, in welchem das Dämpfungselement 4 mit dem Träger fest verbunden ist, in Form mindestens eines Streifens, mindestens eines Umfangsstreifens, mindestens eines sich in Axialrichtung X erstreckenden Streifens, mindestens eines sich diagonal oder schraubenförmig erstreckenden Streifens, mindestens eines Fleckens, mindestens eines Punktes oder mindestens zweier nicht miteinander verbundener Fixierbereiche ausgebildet sein.

Das Dämpfungselement 4 kann auch nur in einem einzigen fest verbundenen Fixierbereich, beispielsweise dem Fixierbereich 44, mit dem ersten Wellenteil 2 fest verbunden sein, und dann im übrigen nicht verbundenen Bereich 48 nicht an dem ersten Wellenteil 2 anliegend ausgebildet sein. Dies kann beispielsweise durch die Dimensionierung des Dämpfungselements 4 und/oder die Bereitstellung eines entsprechenden, eine Beabstandung bereitstellenden Adhäsivs erreicht werden.

In einer nicht gezeigten Weiterbildung kann sich der Fixierbereich, in welchem das Dämpfungselement 4 mit dem ersten Wellenteil 2 fest verbunden ist, auch in Axialrichtung X erstrecken, wobei die Fixierbereiche dann als sich in Axialrichtung erstreckende Streifen ausgebildet sind, welche untereinander entweder nicht verbunden sind, oder zumindest einen Bereich 48 freilassen, in welchem das Dämpfungselement 4 nicht mit dem ersten Wellenteil 2 fest verbunden ist. Beliebige andere Variationen der Fixierbereiche, in welchen das Dämpfungselement 4 mit dem ersten Wellenteil 2 verbunden ist, sind denkbar, beispielsweise eine Vielzahl über die Kontaktfläche 40 hinweg verteilter verbundener Fixierbereiche, in welchen eine Verbindung zwischen dem Dämpfungselement 4 und dem ersten Wellenteil 2 hergestellt ist, oder beliebige andere Anordnungen.

Die selektive Verbindung des Dämpfungselements 4 mit dem Träger, welche nicht vollflächig über die ganze Kontaktfläche 40 hinweg, sondern eben nur in den Fixierbereichen 44, 46 stattfindet, wird dadurch erreicht, dass nur die Fixierbereichen 44, 46, in welchen eine feste Verbindung mit dem Träger hergestellt werden soll, mit einem entsprechenden Haftvermittler oder einem entsprechenden Klebstoff versehen werden, so dass die feste Verbindung beim Verkleben beziehungsweise beim Vulkanisieren des Dämpfungselements 4 mit dem ersten Wellenteil 2 entsprechend nur in diesen Fixierbereichen erreicht wird. Dies kann auf einfache Weise dadurch erreicht werden, dass Bereiche der Oberfläche während der Oberflächenbehandlung zur Ausbildung der Haftvermittlung mit einer Schablone abgedeckt werden. Die Oberflächenbehandlung kann dann einfach in Form des Auftragens des Haftvermittlers auf die Oberfläche oder in Form einer Plasmabehandlung der Oberfläche gegeben sein.

Die feste Verbindung zwischen dem Dämpfungselement 4 und dem jeweiligen Träger kann auf nur einer Seite des Dämpfungselements 4, nämlich der Kontaktfläche 40, erreicht werden, oder aber auf beiden Seiten des Dämpfungselements 4, nämlich sowohl an der ersten Kontaktfläche 40 als auch an der zweiten Kontaktfläche 42.

In den Figuren 2 und 3 ist ein weiteres Ausführungsbeispiel einer Lenkwelle 1 gezeigt, wobei Figur 2 eine Schnittansicht längs der Axialrichtung X zeigt, und Figur 3 eine Querschnittansicht senkrecht zur Axialrichtung X und entlang des Schnitts B-B aus Figur 2 ist.

Wiederum sind ein erstes Wellenteil 2 und ein zweites Wellenteil 3 vorgesehen. Zwischen dem ersten Wellenteil 2 und dem zweiten Wellenteil 3 ist ein Dämpfungselement 4 gezeigt, welches wiederum als Elastomerschicht ausgebildet ist. Das Dämpfungselement 4 ist in dem gezeigten Ausführungsbeispiel zwischen einer äußeren Hülse 5 und einer radial dazu inneren Hülse 6 aufgenommen. Die äußere Hülse 5 ist in dem gezeigten Ausführungsbeispiel als Träger ausgebildet. Eine Verbindung des Dämpfungselements 4 durch dessen erste Kontaktfläche 40 mit der äußeren Hülse 5 findet in zwei Teilbereichen 44, 46 der Kontaktfläche 40 statt. Der dazwischen liegende nicht verbundene Bereich 48 der ersten Kontaktfläche 40 des Dämpfungselements 4 ist nicht mit der äußeren Hülse 5 verbunden, so dass hier eine Verschiebbarkeit zumindest in der Axialrichtung X der Lenkwelle 1 vorliegt.

Wie in Figur 3 zu erkennen ist, bildet die Anordnung aus dem ersten Wellenteil 2, der äußeren Hülse 5, der inneren Hülse 6 und dem zweiten Wellenteil 3 einen losen Formschluss aus, so dass auch ohne das Vorliegen des Dämpfungselements 4 die Übertragung eines Drehmoments von dem zweiten Wellenteil 3 auf den ersten Wellenteil 2 unter Spiel möglich wäre. Hierzu sind an der Innenwand 20 des ersten Wellenteils 2 Vorsprünge 22 vorgesehen, welche in entsprechende Ausnehmungen 52 der Außenwand 50 der äußeren Hülse 5 eingreifen. Vorsprünge 54 in der Innenwand 56 der äußeren Hülse 5 greifen in Ausnehmungen 62 in der Außenwand 60 der inneren Hülse 6 ein. Die innere Hülse 6 ist mit dem zweiten Wellenteil 3 ebenfalls formschlüssig dadurch verbunden, dass in der Außenwand 30 des zweiten Wellenteils 3 Vorsprünge 32 vorgesehen sind, welche in komplementäre Ausnehmungen 64 an der Innenwand 66 der inneren Hülse 6 eingreifen.

Der lose Formschluss liegt entsprechend auch dann vor, wenn das Dämpfungselement 4 nicht vorhanden ist oder durch Verschleiß zerstört wurde.

Das Dämpfungselement 4 ist in dem Zwischenraum zwischen der Innenwand 56 der äußeren Hülse 6 und der Außenwand 60 der inneren Hülse 6 angeordnet und folgt den Konturen der jeweiligen Elemente. Je nach Dimensionierung des Dämpfungselements 4 ist dieses zumindest radial nach außen hin vorgespannt, so dass eine spielfreie aber elastische Übertragung eines Drehmoments zwischen dem ersten Wellenteil 2 und dem zweiten Wellenteil 3 erreicht werden kann.
Durch die Dimensionierung beziehungsweise die Variation der Dimensionierung der Fixierbereiche 44, 46 der Kontaktfläche 40, in welcher das Dämpfungselement 4 mit der äußeren Hülse 5 fest verbunden ist, in Bezug auf den dazwischen liegenden nicht verbundenen Bereich 48 der Kontaktfläche 40, in welchem eine solche feste Verbindung nicht vorliegt, können die Dämpfungseigenschaften des Systems eingestellt werden, insbesondere in Bezug auf die Dämpfungseigenschaften in Axialrichtung X.
Die Anordnung aus der äußeren Hülse 5, dem Dämpfungselement 4 und der inneren Hülse 6 kann auch als Lagerbuchse separat und fertig montiert bereitgestellt werden.

### Bezugszeichenliste

- 1: Lenkwelle
- 2: erstes Wellenteil
- 20: Innenwand
- 201: Rampe
- 22: Vorsprung
- 3: zweites Wellenteil
- 30: Außenwand
- 32: Vorsprung
- 4: Dämpfungselement
- 40: erste Kontaktfläche
- 42: zweite Kontaktfläche
- 44: Fixierbereich oder fest verbundener Teilbereich
- 46: Fixierbereich oder fest verbundener Teilbereich
- 48: nicht verbundener Bereich
- 49: Zwischenraum
- 5: äußere Hülse
- 50: Außenwand
- 52: Ausnehmung
- 54: Vorsprung
- 56: Innenwand
- 6: innere Hülse
- 60: Außenwand
- 62: Ausnehmung
- 64: Ausnehmung
- 66: Innenwand
- X: Axialrichtung

## Patentansprüche

1. Lenkwelle (1) für ein Kraftfahrzeug mit einem ersten Wellenteil (2) und einem zweiten Wellenteil (3), welche zu Übertragung eines Drehmoments miteinander verbunden sind und zwischen welchen zur Dämpfung eingetragener Schwingungen und/oder Vibrationen ein Dämpfungselement (4) angeordnet ist, welches mit einer Kontaktfläche (40) an einem Träger (2, 5) anliegt, wobei das Dämpfungselement (4) nur in einem Teilbereich, dem Fixierbereich (44, 46), der Kontaktfläche (40) mit dem Träger (2, 5) fest verbunden ist und in einem Bereich (48) der Kontaktfläche (40) mit dem Träger (2, 5) nicht fest verbunden ist,
**dadurch gekennzeichnet, dass**
das Dämpfungselement (4) in dem mindestens einen Fixierbereich (44, 46) über Stoffschluss und/oder adhäsiv mit dem Träger (2, 5) verbunden ist, und in dem mit dem Träger (2, 5) nicht verbundenen Bereich (48) ein Reibschluss zwischen Dämpfungselement (4) und Träger (2, 5) vorliegt.

2. Lenkwelle (1) gemäß Anspruch 1, **dadurch gekennzeichnet, dass** der Träger durch das erste Wellenteil (2), durch das zweite Wellenteil (3), durch eine zwischen dem ersten Wellenteil (2) und dem zweiten Wellenteil (3) angeordnete erste Hülse (5), und/oder durch eine zwischen dem ersten Wellenteil (2) und dem zweiten Wellenteil (3) angeordnete zweite Hülse (6) ausgebildet ist.

3. Lenkwelle (1) gemäß Anspruch 1 oder 2, **dadurch gekennzeichnet, dass** das Dämpfungselement (4) zwischen einer äußeren Hülse (5) und einer inneren Hülse (6) angeordnet ist, wobei die äußere Hülse (5) und die innere Hülse (6) zwischen dem ersten Wellenteil (2) und dem zweiten Wellenteil (3) angeordnet sind.

4. Lenkwelle (1) gemäß einem der vorstehenden Ansprüche, **dadurch gekennzeichnet, dass** das Dämpfungselement (4) unter radialer Vorspannung zwischen dem ersten Wellenteil (2) und dem zweiten Wellenteil (3), zwischen einem Wellenteil (2, 3) und einer Hülse (5, 6) und/oder zwischen zwei Hülsen (5, 6) angeordnet ist.

5. Lenkwelle (1) gemäß einem der vorstehenden Ansprüche, **dadurch gekennzeichnet, dass** der erste Wellenteil (2) mit dem zweiten Wellenteil (3) zur Übertragung eines Drehmoments in losem Formschluss steht und das Dämpfungselement (4) eine elastische Verbindung zwischen dem ersten Wellenteil (2) und dem zweiten Wellenteil (3) bereitstellt.

6. Lenkwelle (1) gemäß Anspruch 5, **dadurch gekennzeichnet, dass** das Dämpfungselement (4) zwischen einer äußeren Hülse (5) und einer inneren Hülse (6) angeordnet ist, wobei die innere Hülse (6) mit dem zweiten Wellenteil (3) und die äußere Hülse (5) mit dem ersten Wellenteil (2) drehfest in Kontakt steht und zwischen der äußeren Hülse (5) und der inneren Hülse (6) der lose Formschluss ausgebildet ist.

7. Lenkwelle (1) gemäß einem der vorstehenden Ansprüche, **dadurch gekennzeichnet, dass** der Fixierbereich (44, 46) der Kontaktfläche (40), in welchem das Dämpfungselement (4) fest mit dem Träger verbunden ist, in Form mindestens eines Streifens, der sich in Umfangsrichtung erstreckt und die Axialrichtung geschlossen umschließt, ausgebildet ist.

8. Lenkwelle (1) gemäß einem der vorstehenden Ansprüche, **dadurch gekennzeichnet, dass** die Summe aller Fixierbereiche (44, 46) zwischen 5% und 95% der Kontaktfläche (40) beträgt, bevorzugt zwischen 5% und 70%, besonders bevorzugt zwischen 5% und 40%.

## Claims

1. Steering shaft (1) for a motor vehicle, having a first shaft part (2) and having a second shaft part (3) which are connected to one another for the transmission of a torque and between which there is arranged a damping element (4) for damping introduced oscillations and/or vibrations, which damping element lies with a contact surface (40) against a carrier (2, 5), wherein the damping element (4) is fixedly connected to the carrier (2, 5) only in a subregion, the fixing region (44, 46), of the contact surface (40) and is not fixedly connected to the carrier (2, 5) in a region (48) of the contact surface (40),
**characterized in that**
the damping element (4) is connected by cohesion and/or adhesively to the carrier (2, 5) in the at least one fixing region (44, 46), and frictional engagement exists between damping element (4) and carrier (2, 5) in the region (48) not connected to the carrier (2, 5).

2. Steering shaft (1) according to Claim 1, **characterized in that** the carrier is formed by the first shaft part (2), by the second shaft part (3), by a first sleeve (5) arranged between the first shaft part (2) and the second shaft part (3), and/or by a second sleeve (6) arranged between the first shaft part (2) and the second shaft part (3).

3. Steering shaft (1) according to Claim 1 or 2, **characterized in that** the damping element (4) is arranged between an outer sleeve (5) and an inner sleeve (6), wherein the outer sleeve (5) and the inner sleeve (6) are arranged between the first shaft part (2) and the second shaft part (3).

4. Steering shaft (1) according to one of the preceding claims, **characterized in that** the damping element (4) is arranged under radial preload between the first shaft part (2) and the second shaft part (3), between a shaft part (2, 3) and a sleeve (5, 6), and/or between two sleeves (5, 6).

5. Steering shaft (1) according to one of the preceding claims, **characterized in that** the first shaft part (2) comprises a loose form fit with the second shaft part (3) for the transmission of a torque, and the damping element (4) provides an elastic connection between the first shaft part (2) and the second shaft part (3).

6. Steering shaft (1) according to Claim 5, **characterized in that** the damping element (4) is arranged between an outer sleeve (5) and an inner sleeve (6), wherein the inner sleeve (6) is in rotationally conjoint contact with the second shaft part (3) and the outer sleeve (5) is in rotationally conjoint contact with the first shaft part (2), and the loose form fit is formed between the outer sleeve (5) and the inner sleeve (6).

7. Steering shaft (1) according to one of the preceding claims, **characterized in that** the fixing region (44, 46) of the contact surface (40), in which the damping element (4) is fixedly connected to the carrier, is formed in the manner of at least one strip, which extends in a circumferential direction and which encircles the axial direction in closed fashion.

8. Steering shaft (1) according to one of the preceding claims, **characterized in that** the sum of all fixing regions (44, 46) amounts to between 5% and 95% of the contact surface (40), preferably between 5% and 70%, particularly preferably between 5% and 40%.

## Revendications

1. Arbre de direction (1) pour un véhicule automobile, comprenant une première partie d'arbre (2) et une deuxième partie d'arbre (3) qui sont reliées l'une à l'autre pour le transfert d'un couple et entre lesquelles est disposé un élément d'amortissement (4) pour amortir les oscillations et/ou les vibrations introduites, lequel élément d'amortissement s'applique avec une surface de contact (40) contre un support (2, 5), l'élément d'amortissement (4) étant relié fixement au support (2, 5) seulement dans une région partielle, la région de fixation (44, 46), de la surface de contact (40) et n'étant pas relié fixement au support (2, 5) dans une région (48) de la surface de contact (40),
**caractérisé en ce que** l'élément d'amortissement (4) est relié par liaison de matière et/ou par adhésion au support (2, 5) dans l'au moins une région de fixation (44, 46), et un engagement par friction entre l'élément d'amortissement (4) et le support (2, 5) existant dans la région (48) non reliée au support (2, 5).

2. Arbre de direction (1) selon la revendication 1,
**caractérisé en ce que** le support est réalisé par la première partie d'arbre (2), la deuxième partie d'arbre (3), une première douille (5) disposée entre la première partie d'arbre (2) et la deuxième partie d'arbre (3), et/ou par une deuxième douille (6) disposée entre la première partie d'arbre (2) et la deuxième partie d'arbre (3).

3. Arbre de direction (1) selon la revendication 1 ou 2, **caractérisé en ce que** l'élément d'amortissement (4) est disposé entre une douille extérieure (5) et une douille intérieure (6), la douille extérieure (5) et la douille intérieure (6) étant disposées entre la première partie d'arbre (2) et la deuxième partie d'arbre (3).

4. Arbre de direction (1) selon l'une quelconque des revendications précédentes, **caractérisé en ce que** l'élément d'amortissement (4) est disposé avec précontrainte radiale entre la première partie d'arbre (2) et la deuxième partie d'arbre (3), entre une partie d'arbre (2, 3) et une douille (5, 6) et/ou entre deux douilles (5, 6).

5. Arbre de direction (1) selon l'une quelconque des revendications précédentes, **caractérisé en ce que** la première partie d'arbre (2) est reliée à la deuxième partie d'arbre (3) en vue du transfert d'un couple par engagement par correspondance de formes lâche et l'élément d'amortissement (4) forme une liaison élastique entre la première partie d'arbre (2) et la deuxième partie d'arbre (3) .

6. Arbre de direction (1) selon la revendication 5,
**caractérisé en ce que** l'élément d'amortissement (4) est disposé entre une douille extérieure (5) et une douille intérieure (6), la douille intérieure (6) étant en contact solidaire en rotation avec la deuxième partie d'arbre (3) et la douille extérieure (5) étant en contact solidaire en rotation avec la première partie d'arbre (2) et l'engagement par correspondance de formes lâche étant réalisé entre la douille extérieure (5) et la douille intérieure (6).

7. Arbre de direction (1) selon l'une quelconque des revendications précédentes, **caractérisé en ce que** la région de fixation (44, 46) de la surface de contact (40) dans laquelle l'élément d'amortissement (4) est relié fixement au support est réalisée sous la forme d'au moins une bande qui s'étend dans la direction périphérique et sous forme fermée autour de la direction axiale.

8. Arbre de direction (1) selon l'une quelconque des revendications précédentes, **caractérisé en ce que** la somme de toutes les régions de fixation (44, 46) est comprise entre 5 % et 95 % de la surface de contact (40), de préférence entre 5 % et 70 %, particulièrement préférablement entre 5 % et 40 %.
